# EUROPÄISCHE PATENTSCHRIFT

(11) **EP 4 264 523 B1**
(45) Veröffentlichungstag und Bekanntmachung des Hinweises auf die Patenterteilung: **31.07.2024**
(21) Anmeldenummer: 22814424.2
(22) Anmeldetag: 11.11.2022
(51) Int. Cl.: G06Q 10/08, B64F 1/36

(54) **SICHERHEITSKONTROLLSYSTEM UND SICHERHEITSKONTROLLVERFAHREN**
SECURITY INSPECTION SYSTEM AND SECURITY INSPECTION METHOD
SYSTÈME DE CONTRÔLE DE SÉCURITÉ ET PROCÉDÉ DE CONTRÔLE DE SÉCURITÉ

(30) Priorität: 12.11.2021 DE 102021129502
(43) Veröffentlichungstag der Anmeldung: 25.10.2023
(73) Patentinhaber: Hörmann Klatt Conveyors GmbH, 5202 Neumarkt a. Wallersee (AT)
(72) Erfinder: KLATT, Peter, 5202 Neumarkt a. Wallersee (AT)
(74) Vertreter: Tetzner, Michael
(86) Internationale Anmeldenummer: PCT/EP2022/081613
(87) Internationale Veröffentlichungsnummer: WO 2023/084017

(56) Entgegenhaltungen:
- WO-A1-2020/249192
- CN-A- 111 426 704
- US-A1- 2016 189 096
- US-A1- 2017 083 768

## Beschreibung

Die Erfindung betrifft ein Sicherheitskontrollsystem und ein Sicherheitskontrollverfahren zur Kontrolle von Gepäck einer Person.

Die Sicherheitskontrolle von Personen, insbesondere Passagieren und deren Handgepäck ist ein fester Bestandteil einer jeden Flugreise. Egal ob innereuropäisch oder international, die Prozeduren und auch das Aussehen der dazugehörigen Anlagen haben sich in den letzten Jahrzehnten nur unwesentlich weiterentwickelt, was nicht zuletzt auch den behördlichen Vorgaben geschuldet ist, wonach die zu verwendenden Gerätschaften sowie die einzuhaltenden Abläufe vorgegeben werden. In den letzten Jahren sind jedoch Neuerungen angedacht und der Einsatz modernerer Technologien, wie beispielsweise der Einsatz von Computertomographen zur Bilderzeugung der Handgepäckskontrolle, stufenweise genehmigt worden.

Aufgrund der steigenden Fluggastzahlen haben die Flughafenbetreiber ein gesteigertes Interesse daran, die Effizienz der Sicherheitskontrolle zu steigern und die Personalkosten durch Automatisierung und Überwachung von Prozessen zur reduzieren.

In der EP 2 684 166 B1 wird für diesen Zweck ein automatisiertes Passagierkontrollsystem vorgeschlagen, bei dem Passagiere ihr Gepäck in einem Gepäckaufgabebereich in einen Ladungsträger aufgeben, wobei eine persönliche Kennung des Passagiers erfasst und mit dem Ladungsträger verknüpft wird. Während das Gepäck eine bildgebende Gepäckkontrolle durchläuft, unterziehen sich die Passagiere einer Personenkontrolle. Anschließend begeben sich die Passagiere in einen Gepäckabholbereich, wo der mit der persönlichen Kennung verknüpfte Ladungsträger zum Entleeren bereitgestellt wird.

Die WO 2020/249192 A1 offenbart ein automatisiertes Sicherheitskontrollsystem, wobei das Gepäck in einer bildgebenden Untersuchungseinheit, beispielsweise einer CT-Einheit untersucht wird. Dabei wird entschieden, ob eine manuelle Nachkontrolle des Gepäcks erforderlich ist. Bejahendenfalls wird das Gepäck über ein Transportband in einen Nachuntersuchungsbereich transportiert, wo es einer manuellen Nachkontrolle unterzogen wird.

Nachkontrollstellen sind außerdem aus der US 2016/189096 A1, der CN 111 426 704 A und der US 2017/083768 A1 bekannt.

Der Erfindung liegt nun die Aufgabe zugrunde, die Effizienz der Sicherheitskontrolle, insbesondere im Nachkontrollbereich, zu steigern.

Erfindungsgemäß wird diese Aufgabe durch die Merkmale der Ansprüche 1 und 15 gelöst.

Das erfindungsgemäße Sicherheitskontrollsystem besteht im Wesentlichen aus
- einem Gepäckaufgabebereich mit wenigstens einer Abgabestation zum Aufgeben von Gepäck einer Person in wenigstens einen Ladungsträger,
- einer Gepäckkontrollstation zur bildgebenden Untersuchung des Gepäcks,
- einem Gepäckabholbereich für in der Gepäckkontrollstation nicht beanstandetes Gepäck,
- einem Nachkontrollbereich mit wenigstens einem von zwei Seiten zugänglichen Nachkontrollplatz zur manuellen Nachkontrolle für in der Gepäckkontrollstation beanstandetes Gepäck durch einen Mitarbeiter des Sicherheitskontrollsystems unter Beisein der Person, der das Gepäck gehört,
   wobei der Nachkontrollbereich wenigstens einen dem Nachkontrollplatz zugeordneten Entnahmeplatz zum Entleeren des Ladungsträgers durch die Person, der das Gepäck gehört, aufweist, und
   der Nachkontrollbereich ein Transfersystem zum automatisierten Transfer des mit Gepäck beladenen Ladungsträgers zum Nachkontrollplatz und vom Nachkontrollplatz zum zugeordneten Entnahmeplatz aufweist, wobei das Transfersystem zum Transfer eines Ladungsträgers zum Nachkontrollplatz unabhängig von der Belegung des zugeordneten Entnahmeplatzes mit einem Ladungsträger ausgebildet ist, sowie
- einem Transportsystem für den Transport der mit Gepäck beladenen Ladungsträger vom Gepäckaufgabebereich über die Gepäckkontrollstation zum Gepäckabholbereich oder zum Nachkontrollbereich sowie für den Rücktransport von leeren Ladungsträgern zum Gepäckaufgabebereich.

Das erfindungsgemäße Sicherheitskontrollverfahren weist im Wesentlichen die Schritte auf, dass
- eine Person in einem Gepäckaufgabebereich mit ein oder mehreren Abgabestationen ihr Gepäck in einen an einer Abgabestation bereitgestellten Ladungsträger aufgibt,
- das Gepäck in einer Gepäckkontrollstation einer bildgebenden Untersuchung unterzogen wird,
- die Person ihr Gepäck in einem Gepäckabholbereich mit ein oder mehreren Entnahmestationen abholt, sofern das Gepäck in der Gepäckkontrollstation nicht beanstandet wurde,
- die Person sich zu einem Nachkontrollbereich mit wenigstens einem von zwei Seiten zugänglichen Nachkontrollplatz zur manuellen Nachkontrolle begibt, sofern das Gepäck in der Gepäckkontrollstation beanstandet wurde, wobei der Nachkontrollplatz auf einer Seite von einem Mitarbeiter des Sicherheitskontrollsystems und auf der anderen Seite von der Person, der das beanstandete Gepäck gehört, zugänglich ist,
- die mit Gepäck beladenen Ladungsträger vom Gepäckaufgabebereich über die Gepäckkontrollstation zum Gepäckabholbereich oder zum Nachkontrollbereich transportiert werden und leere Ladungsträger zum Gepäckaufgabebereich zurücktransportiert werden,
wobei
- sich die Person nach der manuellen Kontrolle des Gepäcks vom Nachkontrollplatz zu einem zugeordneten Entnahmeplatz zum Entleeren des Ladungsträgers begibt und
- der mit Gepäck beladene Ladungsträger der Person vom Nachkontrollplatz zum zugeordneten Entnahmeplatz automatisiert transferiert wird, wobei der Transfer eines neuen mit Gepäck beladenen Ladungsträgers zum Nachkontrollplatz unabhängig von der Belegung des zugeordneten Entnahmeplatzes mit einem Ladungsträger erfolgt.

Bei herkömmlichen Systemen wird beanstandetes Gepäck meist an einem separaten Tisch durch einen Mitarbeiter des Sicherheitskontrollsystems unter Beisein der Person, der das Gepäck gehört, untersucht. Da heute schon vielfach Computertomographen bei der Gepäckkontrolle zur Anwendung kommen, die ein deutlich größeres Gepäckvolumen in einem Ladungsträger untersuchen könnten, werden in Zukunft entsprechend große Ladungsträger eingesetzt werden. Dies wird jedoch dazu führen, dass derartige Ladungsträger nicht mehr getragen werden können und die Person somit das Ausräumen bzw. Entleeren des Ladungsträgers nach erfolgter Nachkontrolle Vorort am selben Tisch vornehmen müsste. Das Sicherheitspersonal müsste dann warten, bis die Person alle Gegenstände dem Ladungsträger entnommen hat, bevor die nächste Nachkontrolle erfolgen könnte.

Gemäß der Erfindung werden nun die Prozesse "Nachkontrolle" und "Entnahme" durch das Vorsehen eines Nachkontrollplatzes und wenigstens eines zugehörigen Entnahmeplatzes örtlich voneinander getrennt, sodass das Sicherheitspersonal bereits die nächste Nachkontrolle durchführen kann, während die vorhergehende Person noch dabei ist, ihren Ladungsträger zu entleeren. Für den Transfer des Ladungsträgers zum Nachkontrollplatz und zwischen Nachkontrollplatz und Entnahmeplatz ist daher auch ein entsprechend ausgestaltetes Transfersystem vorgesehen. Natürlich besteht prinzipiell auch die Möglichkeit, dass die Person bzw. der Passagier den Ladungsträger direkt am Nachkontrollplatz ausräumt, wenn entweder nicht viel Gepäck vorhanden ist oder der zugeordnete Entnahmeplatz noch von der vorherigen Person blockiert ist.

Weitere Ausgestaltungen der Erfindung sind Gegenstand der Unteransprüche.

Gemäß einer Ausgestaltung der Erfindung sind hinter dem Nachkontrollplatz ein erster Aufenthaltsbereich für den Mitarbeiter des Sicherheitskontrollsystems und davor ein zweiter Aufenthaltsbereich für die Personen, deren Gepäck zu kontrollieren ist, vorhanden. Weiterhin ist von dem zugehörigen Entnahmeplatz ein dritter Aufenthaltsbereich für die Person zum Entleeren des Ladungsträgers vorgesehen. Die drei Aufenthaltsbereiche sind in der Größe so bemessen, dass sich dort jeweils wenigstens ein Mitarbeiter bzw. eine Person gleichzeitig aufhalten kann. Idealerweise sind die vorhandenen Nachkontroll- und Entnahmeplätze zur Wahrung der Privatsphäre durch geeignete Mittel, wie Trennwände, voneinander getrennt.

Der Ladungsträger wird am Nachkontrollplatz zwischen dem ersten und dem zweiten Aufenthaltsplatz bereitgestellt, wobei zwischen Ladungsträger und dem zweiten Aufenthaltsbereich für die Personen, deren Gepäck zu kontrollieren ist, eine durchsichtige, vorzugsweise auf- und absenkbare Sicherheitsabtrennung vorgesehen werden kann. Auf diese Weise wird der Person ermöglicht, die Kontrolle des Gepäcks zwar zu beobachten, aber man kann auch mit einer aktivierten Sicherheitsabtrennung verhindern, dass die Person die Nachkontrolle durch einen manuellen Eingriff stört.

Des Weiteren kann der Nachkontrollbereich wenigstens ein Puffersystem zur Zwischenlagerung von mit Gepäck beladenden Ladungsträgern aufweisen, wobei ein Transfersystem zum Transfer der im Puffersystem zwischengelagerten, mit Gepäck beladenden Ladungsträger zum Nachkontrollplatz ausgebildet ist. Das Puffersystem könnte wenigstens zwei Pufferplätze aufweisen und ist vorzugsweise zum Umsortieren der mit Gepäck beladenden Ladungsträger ausgebildet, sodass die Reihenfolge der Nachkontrolle an das Eintreffen der Personen im Nachkontrollbereich und nicht an die Reihenfolge, mit der das Gepäck in das Puffersystem gelangt, geknüpft wird. Das Umsortieren der Ladungsträger kann dabei beispielsweise durch Verschieben in wenigstens zwei unterschiedliche, insbesondere orthogonale Achsrichtungen erfolgen.

Gemäß einer bevorzugten Ausführungsform der Erfindung ist in jeder Abgabestation eine erste Identifikationseinrichtung zur Erfassung einer persönlichen Kennung, insbesondere biometrischer Merkmale, der Person vorgesehen, die mit einer Datenverarbeitungseinrichtung zur Verknüpfung der persönlichen Kennung der Person mit dem Ladungsträger, in dem sich das Gepäck der Person befindet, zusammenwirkt. An jeder Abgabestation kann somit eine persönliche Kennung der Person mittels der ersten Identifikationseinrichtung erfasst werden, wobei die persönliche Kennung der Person mittels der Datenverarbeitungseinrichtung mit dem Ladungsträger, in dem sich das Gepäck der Person befindet, verknüpft wird. Sollte eine Person mehrere Ladungsträger benötigen, werden diese ebenfalls mit der persönlichen Kennung der Person verknüpft.

Auf diese Weise erfolgt eine eindeutige Zuordnung der mit dem Gepäck beladenen Ladungsträger mit der Person, der das Gepäck gehört. Die erste Identifikationseinrichtung kann entweder zur erstmaligen Erfassung der persönlichen Kennung der Person ausgebildet sein oder sie wird zur Identifizierung der Person verwendet, wenn die persönliche Kennung im System bereits hinterlegt ist. So könnte die persönliche Kennung einer Person beispielsweise bereits beim Betreten des Flughafengebäudes oder bei der Abgabe des Großgepäcks erfasst werden. Es ist auch denkbar, dass die Person ihre persönliche Kennung im Vorfeld einer Reise, beispielsweise mit einem Smartphone, selbst erzeugt und an die Fluggesellschaft hochlädt. Neben den biometrischen Merkmalen der Person wären auch andere persönliche Kennungen, wie beispielsweise ein Code auf der Bordkarte denkbar. Biometrische Merkmale haben jedoch den Vorteil, dass sie auf einfache Art und Weise mit einer Kamera erfasst werden können und es somit nicht erforderlich ist, dass die Bordkarte oder ein anderer Token eingelesen werden müssen.

In einer besonderen Ausgestaltung des Ladungsträgers kann dieser mit einem Deckel verschließbar ausgebildet sein, wobei an den Abgabestationen, den Entnahmestationen, den Nachkontrollplätzen und den Entnahmeplätzen Einrichtungen vorgesehen werden können, die ein automatisiertes Abheben und Aufsetzen der Deckel auf die Ladungsträger bewirken.

Nach der Abgabe des Gepäcks begibt sich die Person zur Personenkontrolle, die in allgemein bekannter Art und Weise durchgeführt werden kann. Parallel hierzu wird das Gepäck einer bildgebenden Untersuchung in der Gepäckkontrollstation unterzogen. Nach der Personenkontrolle erhält die Person - in Abhängigkeit vom Ergebnis der Gepäckkontrolle - an einer Informationssäule die Information, ob sie sich zum allgemeinen Gepäckabholbereich oder zum Nachkontrollbereich begeben soll.

Damit im Gepäckabholbereich der richtige Ladungsträger bereitgestellt wird, ist der wenigstens eine Nachkontrollplatz mit einer dritten Identifikationseinrichtung zur Erfassung der persönlichen Kennung der am Nachkontrollplatz stehenden Person ausgestattet, wobei die dritte Identifikationseinrichtung mit dem Transfersystem verknüpft ist, um den mit der persönlichen Kennung der Person verknüpften Ladungsträger an diesen Nachkontrollplatz zu transferieren. Auf diese Weise kann vermieden werden, dass die Person versehentlich Einblick in das Gepäck einer anderen Person erhält. Sollte diese Person mehrere Ladungsträger aufgegeben haben, können alle Ladungsträger dieser Person zum Nachkontrollbereich transferiert werden, wobei es ggf. zweckmäßig ist, wenn dann nur der tatsächlich beanstandete Ladungsträger am Nachkontrollplatz bereitgestellt wird.

In einer optionalen Ausgestaltung kann der Nachkontrollbereich wenigstens zwei Nachkontrollplätze mit jeweils wenigstens einem zugeordneten Entnahmeplatz aufweisen und das Transfersystem kann zum Transfer von mit Gepäck beladenen Ladungsträgern aus dem Puffersystem zu den wenigstens zwei Nachkontrollplätzen ausgebildet sein. Dies hat den Vorteil, dass im Nachkontrollbereich mit mehreren Nachkontrollplätzen eine Person an den nächst freien Nachkontrollplatz begeben kann und der richtige Ladungsträger nach erfolgter Identifizierung der persönlichen Kennung der Person bereitgestellt wird.

Der Nachkontrollbereich kann auch einen Wartebereich für Personen aufweisen, deren Gepäck in der Gepäckkontrollstation beanstandet wurde. Dabei kann beispielsweise ein Licht und/oder Tonsignal der nächsten Person im Wartebereich anzeigen, dass sie sich zu einem freigewordenen Nachkontrollplatz begeben kann.

Zur vollständigen Entnahme der Gepäckstücke wird der Ladungsträger und ggf. die weiteren, nicht beanstandeten Ladungsträger der Person zu einem dem Nachkontrollplatz zugeordneten Entnahmeplatz transferiert, der zweckmäßigerweise in räumlicher Nähe angeordnet ist. Damit auch dort der richtige Ladungsträger bereitgestellt wird, kann der wenigstens eine Entnahmeplatz optional mit einer vierten Identifikationseinrichtung zur Erfassung der persönlichen Kennung der am Entnahmeplatz stehenden Person ausgestattet sein, wobei die vierte Identifikationseinrichtung mit dem Transfersystem verknüpft ist, um den mit der persönlichen Kennung der Person verknüpften Ladungsträger vom Nachkontrollplatz an diesen Entnahmeplatz zu transferieren.

Um den Entnahmeprozess automatisiert abzuschließen kann an jedem Entnahmeplatz eine Sensoreinheit, die beispielsweise durch die vierte Identifikationseinrichtung gebildet wird, vorgesehen werden, die dazu ausgebildet ist, das Vorhandensein einer am Entnahmeplatz befindlichen Person festzustellen, und die mit der Überwachungseinrichtung und dem Transfersystem derart verknüpft ist, dass der Entleerungsprozess durch Abtransport des entleerten Ladungsträgers abgeschlossen wird, wenn die Sensoreinheit keine Person vor der Entnahmestation erkennt und der Ladungsträger leer ist.

Natürlich wäre es auch denkbar, dass die Person nach dem Entleeren des Ladungsträgers am Entnahmeplatz den Entleerungsprozess durch eine Eingabe an einer Eingabeeinheit abschließt und der Ladungsträger daraufhin abtransportiert wird. Für diesen Fall müsste aber auch ein automatisierter Abtransport vorgesehen werden, wenn die Person den Entnahmeplatz verlässt, ohne den Prozess durch Eingabe abzuschließen.

Die Überwachungseinrichtung am Entnahmeplatz kann vorzugsweise auch zur Erkennung eines nicht vollständig entleerten und/oder verschmutzen Ladungsträgers ausgebildet sein, wobei das Transportsystem dann auch zur Ausschleusung von nicht komplett entleerten und/oder verschmutzen Ladungsträgern ausgebildet ist. Vorzugsweise wird die Person aber rechtzeitig durch geeignete akustische oder visuelle Hinweise darauf aufmerksam gemacht, dass sich noch Gegenstände im Ladungsträger befinden.

Weitere Ausgestaltungen und Vorteile der Erfindung werden anhand der nachfolgenden Beschreibung und der Zeichnungen näher erläutert.

In der Zeichnung zeigen
- Fig. 1: ein Blockdiagramm des Sicherheitskontrollsystems,
- Fig. 2: eine schematische Ansicht des Gepäckaufgabebereichs mit einer Abgabestation,
- Fig. 3: eine schematische Ansicht des Gepäckabholbereichs mit einer Entnahmestation,
- Fig. 4: eine schematische Aufsicht des Nachkontrollbereichs gemäß einer ersten Ausgestaltung,
- Fig. 5: eine schematische Ansicht eines Nachkontrollplatzes,
- Fig. 6: eine schematische Ansicht eines Entnahmeplatzes,
- Fig. 7: eine schematische Aufsicht des Nachkontrollbereichs gemäß einer zweiten Ausgestaltung und
- Fig. 8: eine schematische Aufsicht des Nachkontrollbereichs gemäß einer dritten Ausgestaltung.

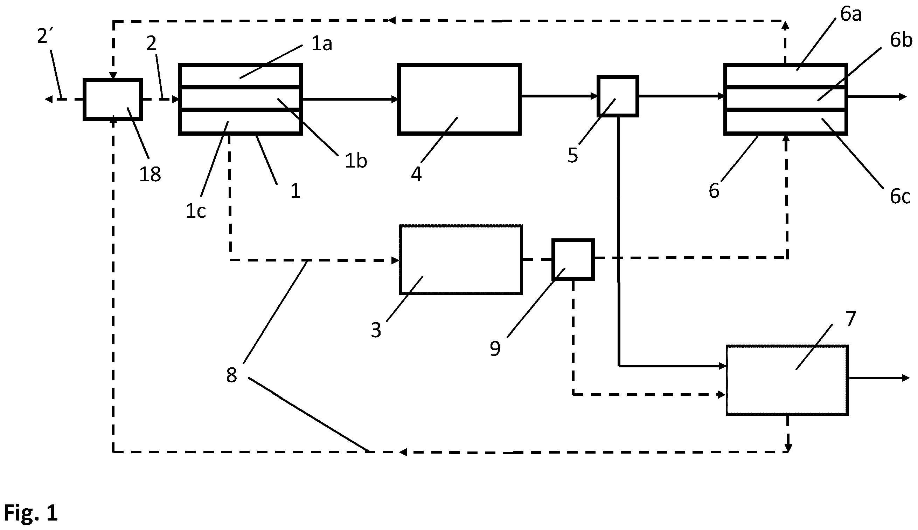

Fig. 1 zeigt ein als Blockdiagramm dargestelltes Ausführungsbeispiel für ein Sicherheitskontrollsystem. Es sieht einen Gepäckaufgabebereich 1 mit ein oder mehreren Abgabestationen 1a, 1b, 1c zur Abgabe von Gepäck in einen Ladungsträger 2 vor. Der mit Gepäck beladende Ladungsträger 2 wird einer Gepäckkontrollstation 3 zur bildgebenden Untersuchung des Gepäcks zugeführt, wobei dort vorzugsweise ein Computertomograph zum Einsatz kommt.

Während der Gepäckuntersuchung begibt sich die Person zu einer Personenkontrollstation 4. Hierbei können beispielsweise Metalldetektoren und Bodyscan-Einrichtungen sowie weitere Einrichtungen zum Einsatz kommen.

Die Personenkontrollstation 4 weist vorzugsweise Anstell- und Wegsysteme auf, die eine Synchronisation zwischen Gepäckstatus und Personenkontrolle gezielt steuern können. So erhält die Person nach erfolgter Personenkontrolle an einer Informationseinrichtung 5 die Information, ob sie sich zu einem Gepäckabholbereich 6 mit ein oder mehreren Entnahmestationen 6a, 6b, 6c zum Empfang und Entleeren des der Person zugeordneten Ladungsträgers oder zu einem Nachkontrollbereich 7 zur manuellen Nachkontrolle ihres Gepäcks begeben soll. Die Personenwege sind in Fig. 1 mit durchgezogenen Pfeilen veranschaulicht.

Mit gestrichelten Pfeilen ist ein Transportsystem 8 für den Transport der Ladungsträger 2 vom Gepäckaufgabebereich 1 über die Gepäckkontrollstation 3 zum Gepäckabholbereich 6 bzw. zum Nachkontrollbereich 7 und für den Rücktransport von leeren Ladungsträgern zum Gepäckaufgabebereich 1 dargestellt. Nach der Gepäckkontrollstation 3 ist eine Weiche 9 vorgesehen, um das in der Gepäckkontrollstation 3 beanstandete Gepäck zum Nachkontrollbereich 7 abzuzweigen. Bis zur Weiche muss der Bediener der Gepäckkontrollstation (CT-Gerät) seine Entscheidung getroffen haben, ob eine Nachkontrolle erforderlich ist. Sollte keine Entscheidung rechtzeitig getroffen werden, dann wird der Ladungsträger 2 automatisch zum Nachkontrollbereich 7 gefördert, damit es auf der Strecke zum Gepäckabholbereich 6 nicht zu einer Vermischung von beanstandeten und nicht beanstandeten Gepäckstücken kommt.

Im Bereich der Rücktransportstrecke ist eine Einrichtung 18 zur Ausschleusung von nicht komplett entleerten und/oder verschmutzen Ladungsträgern 2' vorgesehen.

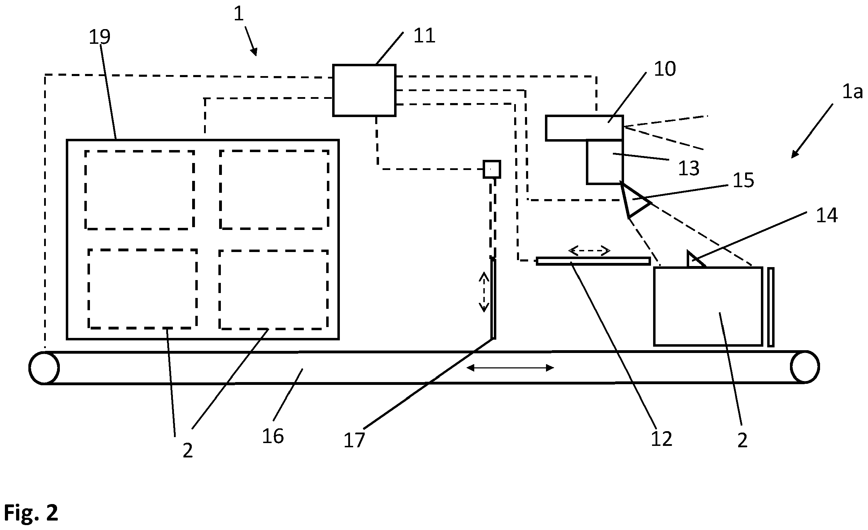

Anhand von Fig. 2 wird nachfolgend der Gepäckaufgabebereich 1 am Beispiel der Abgabestation 1a näher beschrieben. So weist die Abgabestation 1a eine erste Identifikationseinrichtung 10 zur Erfassung einer persönlichen Kennung (insbesondere biometrische Merkmale) der Person auf, die vorzugsweise als Kamera ausgebildet ist. Die persönliche Kennung der Person, wird mittels einer Datenverarbeitungseinrichtung 11 mit dem an der Abgabestation 1a bereitgestellten Ladungsträger 2 verknüpft, in dem eine am Ladungsträger 2 angebrachte Kennzeichnung mit einem nicht näher dargestellten Lesegerät ausgelesen und mit der persönlichen Kennung der Person verknüpft wird. Die Kennzeichnung am Ladungsträger 2 kann beispielsweise durch ein RFID, einen QR-Code oder ein ähnliches Kennzeichen gebildet werden.

Sobald die persönliche Kennung der Person erfasst ist, öffnet sich eine Abdeckung 12, die den Ladungsträger zum Beladen freigibt. Der Ladungsträger 2 ist im dargestellten Ausführungsbeispiel kastenartig und nach oben offen ausgebildet. Die Person kann dann ihr Gepäck im Ladungsträger 2 verstauen, wobei über eine erste Informationseinrichtung 13, die insbesondere einen Monitor und einen Lautsprecher umfasst, visuelle und/oder akustische Hinweise für die Person gegeben werden können. So kann insbesondere darauf hingewiesen werden, dass eine bestimmte maximale Beladungsgrenze nicht überschritten werden darf. Hierzu kann der Ladungsträger 2 eine entsprechende Markierung aufweisen. Es ist aber auch denkbar, dass der Ladungsträger 2 so beladen werden darf, dass das Gepäck 14 nicht über die Ausmaße des Ladungsträgers 2 hinausragt.

Eine erste Überwachungseinrichtung 15, die beispielsweise durch eine Kamera gebildet wird, erkennt den Beladungszustand des Ladungsträgers 2, wobei im Falle eines unerwünschten Beladungszustands über die erste Informationseinrichtung 13 ein entsprechender Hinweis erfolgt. Nachdem das Gepäck 14 im dargestellten Beispiel über die Ausmaße des Ladungsträgers 2 herausragt, könnte die Person dazu aufgefordert werden, das Gepäck richtig einzulegen oder einen zweiten Ladungsträger anzufordern. Des Weiteren besteht die Möglichkeit, Hilfe durch einen Mitarbeiter anzufordern, wenn eine Person nicht zurechtkommt.

Ist das Gepäck ordnungsgemäß im Ladungsträger 2 verstaut, kann der Gepäckabgabeprozess dadurch automatisiert abgeschlossen werden, dass eine Überprüfung, insbesondere nach einer vorgegebenen Zeit, ergibt, dass sich keine Person mehr an der Abgabestation 1a befindet, sodass ein automatisierter Abtransport des Ladungsträgers 2 in Gang gesetzt werden kann. Es könnte aber auch vorgesehen werden, dass die Person den Ladungsträger mit einer Abdeckung oder einem Deckel verschließt. Alternativ könnte der Abschluss auch durch Betätigung einer Taste oder in ähnlicher Art und Weise abgeschlossen werden. Sollte die Person ohne Bestätigung die Entnahmestation verlassen, könnte sie über die erste Informationseinrichtung 13 zur Betätigung aufgefordert werden. Sollte sich die Person dennoch entfernen, was ggf. durch einen blockierbaren Personenausgang verhindert werden könnte, kann nach Ablauf einer vorgegebenen Zeit auch ein automatischer Abtransport in Gang gesetzt werden.

Für den Abtransport schließt zunächst die Abdeckung 12 und/oder ein Tor 17 öffnet sich, um den Abtransport des Ladungsträgers 2 freizugeben. Der Transport des Ladungsträgers 2 erfolgt über das Transportsystem 8 und/oder ein mit dem Transportsystem 8 in Verbindung stehendes Bereitstellungssystem 16, wobei die erste Überwachungseinrichtung 15 mit dem Bereitstellungssystem 16 und/oder dem Transportsystem 8 derart gekoppelt ist, dass der Abtransport des Ladungsträger 2 aus der Abgabestation 1a blockiert wird (Tor 17 bleibt geschlossen), wenn ein unerwünschter Beladungszustand des Ladungsträgers 2 festgestellt wird. Der mit Gepäck beladene Ladungsträger 2 wird dann über das Transportsystem 8 der Gepäckkontrollstation 3 zugeführt, während sich die Person zu Personenkontrollstation 4 begibt.

Der Abgabestation 1a ist ein Pufferbereich 19 für rückgeführte, leere Ladungsträger 2 zugeordnet, wobei in der Abgabestation 1c der nächste leere Ladungsträger über das Transportsystem 8 oder das Bereitstellungsystem 16 bereitgestellt wird.

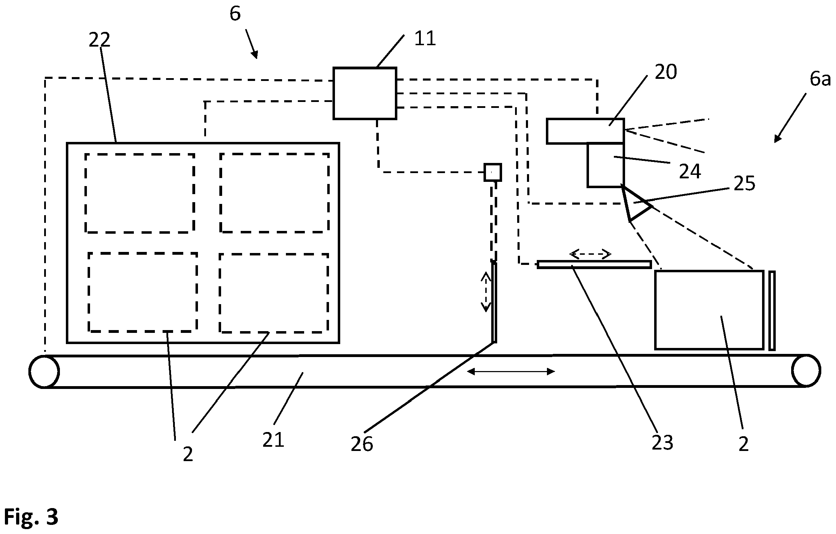

Im Folgenden wird anhand der Fig. 3 der Gepäckabholbereich 6 am Beispiel der Entnahmestation 6a näher erläutert.

Die Entnahmestation 6a kann grundsätzlich ähnlich oder identisch zur Abgabestation 1a aufgebaut werden. So weist die Entnahmestation 6a eine zweite Identifikationseinrichtung 20 zur Erfassung der persönlichen Kennung der vor der Entnahmestation 6a stehenden Person auf, wobei die zweite Identifikationseinheit 20 mit einem zweiten Bereitstellungssystem 21 verknüpft ist, um den mit der persönlichen Kennung der Person verknüpften Ladungsträger 2 an diese Entnahmestation 6a zu transferieren. Der Gepäckabholbereich 6 weist hierzu wenigstens einen Puffer 22 für mehrere mit Gepäck beladene Ladungsträger 2 auf, wobei dem Puffer 22 mehrere der Entnahmestationen, also beispielsweise die Entnahmestationen 6a, 6b und 6c zugeordnet sind. Das zweite Bereitstellungssystem 21 ist zum Transfer der mit Gepäck beladenen Ladungsträger 2 aus dem Puffer 22 zu einer der Entnahmestationen 6a, 6b, 6c ausgebildet, wobei der Puffer 22 - unabhängig von der Reihenfolge, in welcher die Ladungsträger 2 in den Puffer 22 eingebracht worden sind - in der Lage ist, die Ladungsträger 2 in beliebiger Reihenfolge zu jeder der zugeordneten Entnahmestationen zu transferieren. Die Person, die ihr Gepäck abholen will, kann sich daher an eine beliebige Entnahmestation 6a, 6b, 6c begeben, die gerade frei ist und wird dort von der zweite Identifikationseinrichtung 20 identifiziert, sodass der mit ihrer persönlichen Kennung verknüpfte Ladungsträger 2 aus dem Puffer 22 an diese Entnahmestation transferiert wird.

Sobald der zugehörige Ladungsträger 2 in der Entnahmestation bereitgestellt ist, öffnet sich eine Abdeckung 23, die den Ladungsträger 2 zum Entladen zugänglich macht. Über eine Eingabe- und/oder Ausgabeeinheit 24 können Informationen an die Person bereitgestellt werden. Eine zweite Überwachungseinrichtung 25, die beispielsweise durch eine Kamera gebildet wird, erkennt den Beladungszustand des Ladungsträgers 2. Über die Eingabe- und/oder Ausgabeeinheit 24 kann die Person, insbesondere darauf aufmerksam gemacht werden, dass sich noch Gepäckstücke/Gegenstände im Ladungsträger 2 befinden. Nach der vollständigen Entnahme kann dann, beispielsweise ein guter Flug gewünscht und/oder das Abfluggate angezeigt werden, auch die Aufschaltung von Werbung wäre denkbar.

In einer vorteilhaften Ausgestaltung ist an den vorhandenen Entnahmestationen eine Sensoreinheit vorgesehen, die beispielsweise durch die zweite Identifikationseinheit 20 gebildet wird, die dazu ausgebildet ist, das Vorhandensein einer vor der Entnahmestation befindlichen Person festzustellen, und die mit der zweiten Überwachungseinheit 25 und dem zweiten Bereitstellungssystem 21 derart verknüpft ist, dass der Entleerungsprozess durch Abtransport des entleerten Ladungsträgers 2 abgeschlossen wird, wenn die Sensoreinheit keine Person vor der Entnahmestation 6a erkennt und der Ladungsträger 2 leer ist. Auf diese Weise kann die Entnahmestation schnellstmöglich für die nächste Person zur Verfügung gestellt werden.

Ist der Entnahmeprozess beendet, schließt zunächst die Abdeckung 23 und/oder ein Tor 26 öffnet sich, um den Abtransport des Ladungsträgers 2 freizugeben. Der Transport des Ladungsträgers 2 erfolgt über das zweite Bereitstellungssystem 21 und/oder das Transportsystem 8, wobei die zweite Überwachungseinrichtung 25 mit dem zweiten Bereitstellungssystem 21 und/oder dem Transportsystem 8 derart gekoppelt ist, dass der Abtransport des Ladungsträgers 2 aus der Entnahmestation 6a blockiert wird (Tor 26 bleibt geschlossen), wenn sich noch ein Gegenstand im Ladungsträger 2 befinden sollte. Sollte der Ladungsträger 2 leer sein wird der Rücktransport zum Gepäckaufgabebereich 1 eingeleitet. Alsdann kann der nächste Entnahmeprozess eingeleitet werden, indem die nächste, vor der Entnahmestation stehende Person von der zweiten Identifikationseinrichtung 20 erfasst wird.

Gemäß einer bevorzugten Ausgestaltung der Erfindung kann die zweite Überwachungseinrichtung 25 in den Entnahmestationen 6a, 6b, 6c auch in der Lage sein, eine Verschmutzung des Ladungsträgers 2, beispielsweise durch eine ausgelaufene Flüssigkeit, zu erkennen. Verschmutzte Ladungsträger könnten dann an der Einrichtung 18 (Fig. 1) ausgeschleust werden. Eine Ausschleusung könnte auch im Falle eines nicht oder nicht vollständig entleerten Ladungsträgers erfolgen, wenn sich die Person vor der vollständigen Entleerung von der Entnahmestation 6a, 6b, 6c entfernt haben sollte.

Wird das Gepäck einer Person in der Gepäckkontrollstation 3 beanstandet, wird die Person an der Informationseinrichtung 5 zunächst anhand ihrer persönlichen Kennung erkannt und dann darauf hingewiesen, dass sie sich zum Nachkontrollbereich 7 zu begeben hat.

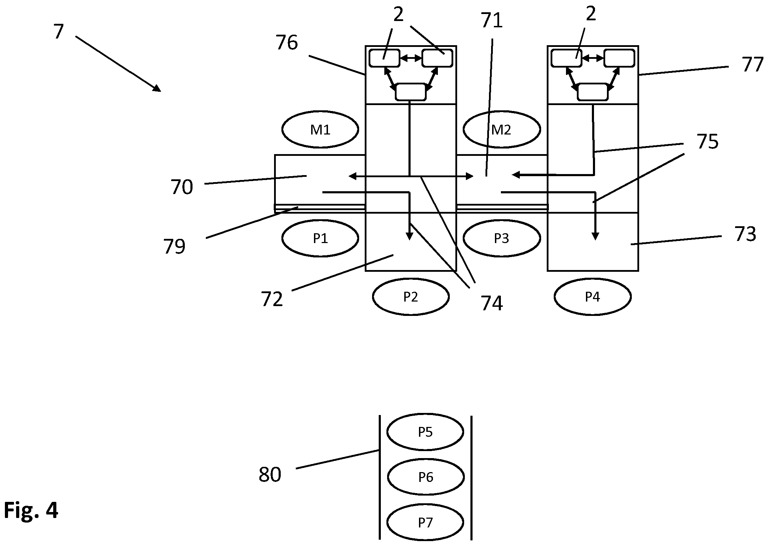

Fig. 4 zeigt ein erstes Ausführungsbeispiel eines erfindungsgemäßen Nachkontrollbereichs 7, der hier einen ersten und einen zweiten Nachkontrollplatz 70, 71 mit einem ersten und einem zweiten zugeordneten Entnahmeplatz 72, 73 zum Entleeren des Ladungsträgers 2 durch die Person, der das Gepäck gehört, aufweist. Der Nachkontrollbereich 7 sieht weiterhin ein erstes und ein zweites Transfersystem 74, 75 zum automatisierten Transfer der mit Gepäck beladenen Ladungsträger 2 zu den Nachkontrollplätzen 70, 71 und von den Nachkontrollplätzen 70, 71 zu den zugeordneten Entnahmeplätzen 72, 73 vor, wobei die Transfersysteme 74, 75 zum Transfer der Ladungsträger 2 zum Nachkontrollplatz 70 bzw. 71 unabhängig von der Belegung des zugeordneten Entnahmeplatzes 72 bzw. 73 mit einem Ladungsträger 2 ausgebildet ist. Mit anderen Worten kann ein Ladungsträger zum Nachkontrollplatz 70 bzw. 71 auch dann transportiert werden, wenn der zugehörige Entnahmeplatz 72 bzw. 73 noch belegt sein sollte.

Hinter jedem Nachkontrollplatz 70 bzw. 71 ist jeweils ein erster Aufenthaltsbereich M1 bzw. M2 für Mitarbeiter der Sicherheitskontrolle vorgesehen, während vor jedem Entnahmeplatz 72 bzw. 73 ein zweiter Aufenthaltsbereich P1 bzw. P3 für Personen, der Gepäck nachkontrolliert werden muss, vorhanden ist, wobei die Größe der ersten und zweiten Aufenthaltsbereiche M1, M2 und P1, P3 so bemessen ist, dass sich dort jeweils wenigstens eine Person gleichzeitig aufhalten kann. Der Nachkontrollplatz 70 bzw. 71 ist somit zwischen dem ersten Aufenthaltsbereich M1 bzw. M2 und dem zweiten Aufenthaltsbereich P1 bzw. P3 vorgesehen.

Weiterhin weist der Nachkontrollbereich 7 ein erstes und eine zweites Puffersystem 76 bzw. 77 zur Zwischenlagerung von mit Gepäck beladenden Ladungsträgern 2 auf, wobei die Transfersysteme 74 bzw. 75 zum Transfer der in den Puffersystemen 76 bzw. 77 zwischengelagerten, mit Gepäck beladenden Ladungsträger 2 zu den Nachkontrollplätzen 70 bzw. 71 ausgebildet sind. Die Puffersysteme 76, 77 können dabei jeweils wenigstens zwei Pufferplätze zur Zwischenlagerung von mit Gepäck beladenden Ladungsträgern 2 vorsehen, wobei die Puffersysteme 76, 77 zum Umsortieren der mit Gepäck beladenden Ladungsträger 2 ausgebildet sind. Im dargestellten Ausführungsbeispiel sind das erste und das zweite Puffersystem 76, 77 für jeweils drei Ladungsträger 2 ausgelegt, wobei aber auch eine größere Pufferbelegung denkbar wäre. Idealerweise sind die Puffersysteme 76, 77 zum Umsortieren der Ladungsträger durch Verschieben in wenigstens zwei unterschiedliche, insbesondere orthogonale Achsrichtungen ausgebildet, sodass die Reihenfolge der Nachkontrolle nicht an die Reihenfolge gebunden ist, mit der die Ladungsträger 2 in eines der Puffersysteme 76 bzw. 77 gelangt sind. Die Personen, die zum Nachkontrollbereich müssen, können sich somit gegenseitig überholen und sind bei der Nachkontrolle nicht an die Reihenfolge gebunden, mit der die Ladungsträger im Nachkontrollbereich ankommen.

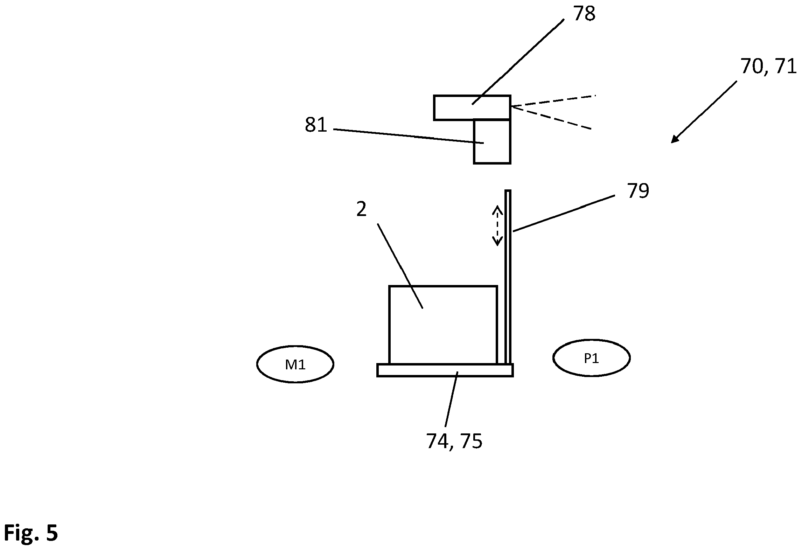

Gemäß Fig. 5 sind die Nachkontrollplätze 70, 71 jeweils mit einer dritten Identifikationseinrichtung 78 zur Erfassung der persönlichen Kennung der am Nachkontrollplatz 70 bzw. 71 stehenden Person ausgestattet, wobei die dritte Identifikationseinrichtung 78 mit dem Transfersystem 74 bzw. 75 verknüpft ist, um den mit der persönlichen Kennung der Person verknüpften Ladungsträger 2 an diesen Nachkontrollplatz zu transferieren. Dabei wird der Ladungsträger 2 mit dem beanstandeten Gepäck zwischen dem ersten und dem zweiten Aufenthaltsplatz M1, P1 bereitgestellt, sodass sich der Ladungsträger zwischen dem Mitarbeiter des Sicherheitskontrollsystems und der Person, welcher das beanstandete Gepäck gehört, befindet. Um ein unerlaubtes Eingreifen der Person während der Nachkontrolle durch den Mitarbeiter zu verhindern, kann zwischen dem zweiten Aufenthaltsplatz P1 und dem bereitgestellten Ladungsträger 2 eine durchsichtige, vorzugsweise auf- und absenkbare Sicherheitsabtrennung 79 vorgesehen werden.

In einer weiteren Ausgestaltung des Nachkontrollbereichs (Fig. 4) kann der Nachkontrollbereich 7 wenigstens einen Wartebereich 80 für Personen (P5 - P7) aufweisen, bis der nächste Nachkontrollplatz frei wird. Jeder Nachkontrollplatz 70, 71 könnte optional Ablageflächen vorsehen, um das Ausräumen zu unterstützen. Außerdem könnten dort für den Mitarbeiter des Sicherheitskontrollsystems ein kleines Röntgengerät oder andere Hilfsmittel zur Unterstützung der Nachkontrolle bereitstehen. Auch könnte die Möglichkeit bestehen, den gesamten Ladungsträger oder Teile des Gepäcks auf Veranlassung des Mitarbeiters nochmals automatisiert durch einen Computertomographen zu leiten.

Im dargestellten Ausführungsbeispiel ist die Entnahmestation 72 dem Nachkontrollplatz 70 und die Entnahmestation 73 dem Nachkontrollplatz 71 zugeordnet, wobei die Ladungsträger 2 aus dem Puffern 76 und vorzugsweise auch aus dem Puffer 77 an beide Nachkontrollplätze 70, 71 transferierbar sind. Im Rahmen der Erfindung ist es weiterhin denkbar, dass ein Mitarbeiter des Sicherheitskontrollbereichs zumindest zeitweise für zwei Nachkontrollplätze zuständig sein kann.

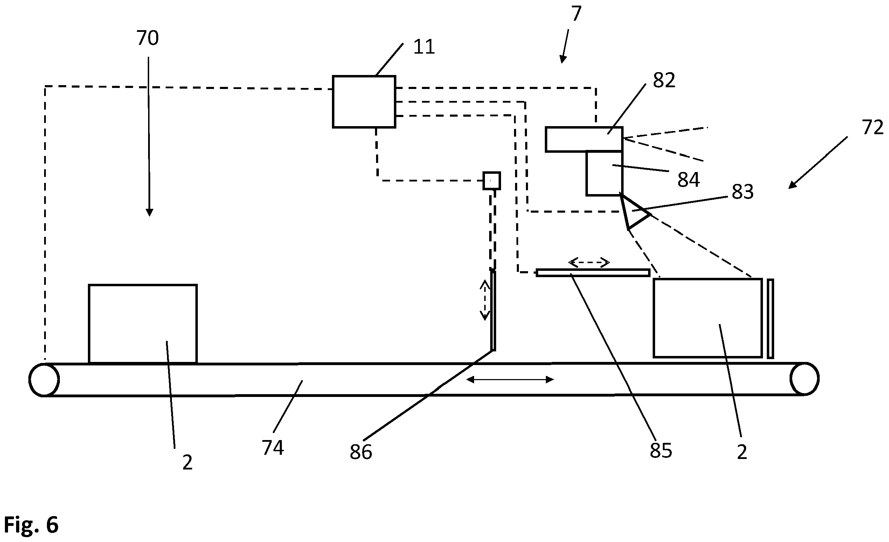

Nach erfolgter Nachkontrolle wird der Ladungsträger mit dem Gepäck der Person vom Nachkontrollplatz 70, 71 zum zugeordneten Entnahmeplatz 72, 73 transferiert, wo er dann von der Person entleert werden kann. Dadurch begibt sich die Person vom Aufenthaltsbereich P1 zum Aufenthaltsbereich P2 vor dem Entnahmeplatz 72 bzw. vom Aufenthaltsbereich P3 zum Aufenthaltsbereich P4 vor dem Entnahmeplatz 73. Im Folgenden wird anhand von Fig. 6 der Entnahmeplatz am Beispiel des Entnahmeplatzes 72 näher beschrieben. Prinzipiell können die Entnahmeplätze 72 bzw. 73 des Nachkontrollbereichs 7 identisch oder zumindest sehr ähnlich zu den Entnahmestationen 6a, 6b, 6c des Gepäckabholbereichs 6 ausgebildet sein.

So ist der Entnahmeplatz 72 mit einer optionalen vierten Identifikationseinrichtung 82 zur Erfassung der persönlichen Kennung der am Entnahmeplatz 72 stehenden Person ausgestattet, wobei die vierte Identifikationseinrichtung 82 mit dem ersten Transfersystem 74 verknüpft ist, um den mit der persönlichen Kennung der Person verknüpften Ladungsträger 2 vom Nachkontrollplatz 70 an diesen Entnahmeplatz 72 zu transferieren. Am Entnahmeplatz 72 ist eine weitere Überwachungseinrichtung 83 zur Erkennung eines nicht vollständig entleerten und/oder verschmutzen Ladungsträgers vorgesehen. In Übereinstimmung mit den Abholstationen ist ebenfalls an jedem Entnahmeplatz 72 eine Sensoreinheit, die beispielsweise durch die vierte Identifikationseinrichtung 82 gebildet wird, vorgesehen, die dazu ausgebildet ist, das Vorhandensein einer am Entnahmeplatz 72 befindliche Person festzustellen, und die mit der weiteren Überwachungseinrichtung 83 und dem ersten Transfersystem 74 derart verknüpft ist, dass der Entleerungsprozess durch Abtransport des entleerten Ladungsträgers 2 abgeschlossen wird, wenn die Sensoreinheit keine Person vor der Entnahmestation erkennt und der Ladungsträger leer ist.

Im Übrigen kann in Übereinstimmung mit den Entnahmestationen eine weitere Informationseinrichtung 84 vorgesehen werden, um die Person beispielsweise über den Beladungszustand des Ladungsträgers zu informieren. Auch könnte hierüber beispielsweise das Gate angezeigt werden, an welches sich die Person nach dem Entleeren des Ladungsträger 2 zu begeben hat, sofern diese Information im System vorliegt. Weiterhin könnte am Entnahmeplatz 72, 73 optional ein ausklappbarer Sitz vorgesehen werden, der beispielsweise das Anziehen erleichtern könnte.

Auch können wiederum eine Abdeckung 85 zur Freigabe des Ladungsträgers 2 und ein Tor 86 vorhanden sein. Die Datenverarbeitungseinrichtung 11 dient wiederum zur Steuerung des Prozesses.

Idealerweise ist der Nachkontrollbereich 7 angrenzend an den Gepäckabholbereich 6 angeordnet, sodass zumindest wenigstens ein Entnahmeplatz 72 bzw. 73 in Abhängigkeit der Anzahl von Personen im Nachkontrollbereich 7 und im Gepäckabholbereich 6 wahlweise als Entnahmeplatz oder als Entnahmestation fungieren kann.

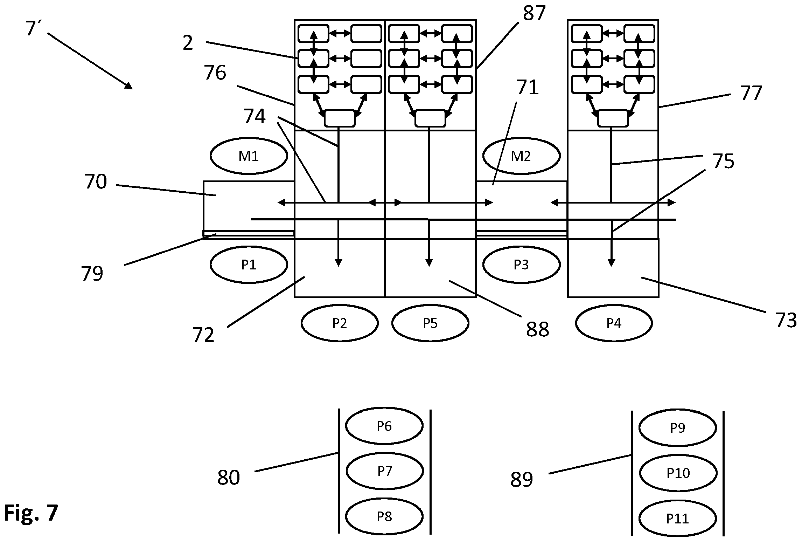

Fig. 7 zeigt noch ein zweites Ausführungsbeispiel eines Nachkontrollbereichs 7', bei dem noch zusätzlich ein drittes Puffersystem 87 und ein dritter Entnahmeplatz 88 vorgesehen sind. Am ersten Nachkontrollplatz 70 können Ladungsträger 2 aus dem ersten Puffersystem 76 als auch aus dem dritten Puffersystem 87 bereitgestellt werden. An den zweiten Nachkontrollplatz 71 werden vorzugsweise sowohl Ladungsträger 2 aus dem zweiten Puffersystem 77 als auch aus dem dritten Puffersystem 87 transferiert. Optional ist es natürlich auch denkbar, dass die Ladungsträger aus jedem der drei Puffersysteme an jeden der zwei Nachkontrollplätze transferierbar sind, wodurch sich die größtmögliche Flexibilität ergeben würde. Im Unterschied zum ersten Ausführungsbeispiel gemäß Fig. 4 sind den beiden Nachkontrollplätzen 70, 71 nicht nur zwei, sondern drei Entnahmeplätze 72, 73, 88 zugeordnet, wodurch mit hoher Wahrscheinlichkeit sichergestellt werden kann, dass der Person nach erfolgter Nachkontrolle sofort ein freier Entnahmeplatz zur Verfügung steht.

Wenn die Ladungsträger tatsächlich aus jedem der drei Puffersysteme an jeden der zwei Nachkontrollplätze transferierbar wären, dann würde der eine erste Wartebereich 80 völlig ausreichen. Da jedoch der zweite Nachkontrollplatz 71 während einer gerade stattfindenden Nachkontrolle, je nach Ausgestaltung des Systems, einen Transfer eines Ladungsträgers 2 aus dem zweiten Puffersystem 77 zum ersten Nachkontrollplatz 70 blockieren könnte, wäre es zweckmäßig, für die Personen, deren Ladungsträger im zweiten Puffersystem 77 eingebracht werden, einen zweiten Wartebereich 89 vorzusehen. Nach der Personenkontrolle müsste dann an der Informationseinrichtung 5 (Fig. 1) nicht nur der Hinweis an die Person erfolgen, dass sie sich in den Nachkontrollbereich 7' begeben müsste, sondern auch die Information, welcher der beiden Wartebereiche 80, 89 für sie vorgesehen ist.

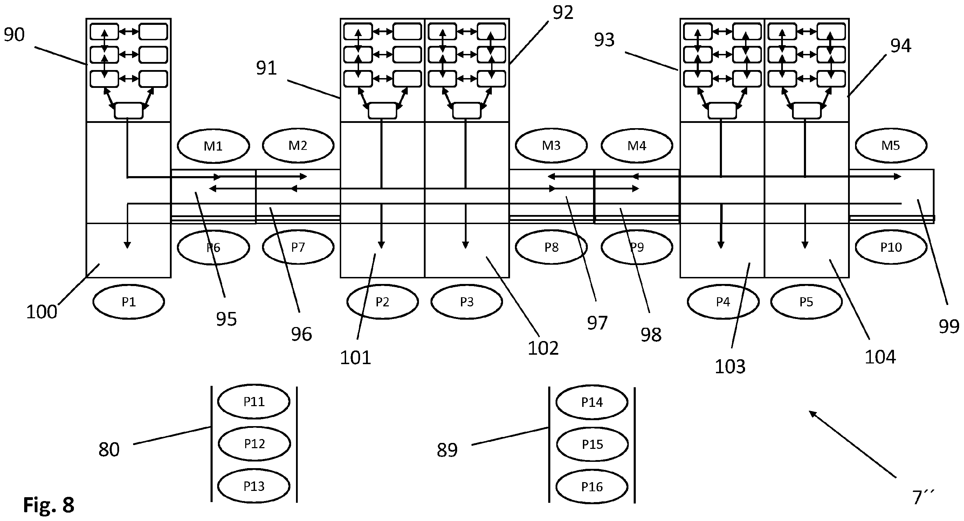

In einem dritten Ausführungsbeispiel eines Nachkontrollbereichs 7" gemäß Fig.8 sind insgesamt fünf Puffersysteme 90 - 94 mit 5 Nachkontrollplätzen 95 - 99 und fünf Entnahmeplätzen 100 - 104 vorgesehen, wobei die Besonderheit darin besteht, dass jeweils zwei Nachkontrollplätze 95 und 96 bzw. 97 und 98 direkt nebeneinander angeordnet sind. Dies hat den Vorteil, ein Mitarbeiter auf einfache Art und Weise ggf. auch zwei Nachkontrollplätze bedienen könnte.

Die Erfindung ist aber nicht auf die dargestellten Ausführungsbeispiele beschränkt. Es sind vielmehr weitere Anordnungen mit mehr oder weniger Nachkontrollplätzen bzw. Entnahmeplätzen denkbar. Auch könnte beispielsweise lediglich ein großes Puffersystem vorgesehen werden, dass mit wenigstens drei, vorzugsweise allen Nachkontrollplätzen in Verbindung steht.

Der Rücktransport der entleerten Ladungsträger 2 kann in beiden Ausführungsbeispielen in ähnlicher Art und Weise wie bei den Entnahmestationen erfolgen, indem das erste bzw. zweite Transfersystem 74, 75 in geeigneter Weise mit der Rücktransportstrecke für die Ladungsträger 2 in Verbindung steht.

## Patentansprüche

1. Sicherheitskontrollsystem mit
- einem Gepäckaufgabebereich (1) mit wenigstens einer Abgabestation (1a, 1b, 1c) zum Aufgeben von Gepäck einer Person in wenigstens einen Ladungsträger (2),
- einer Gepäckkontrollstation (3) zur bildgebenden Untersuchung des Gepäcks,
- einem Gepäckabholbereich (6) für in der Gepäckkontrollstation nicht beanstandetes Gepäck,
- einem Nachkontrollbereich (7) mit wenigstens einem von zwei Seiten zugänglichen Nachkontrollplatz (70, 71) zur manuellen Nachkontrolle für in der Gepäckkontrollstation beanstandetes Gepäck durch ein Sicherheitspersonal unter Beisein der Person, der das Gepäck gehört,
- einem Transportsystem (8) für den Transport der mit Gepäck beladenen Ladungsträger (2) vom Gepäckaufgabebereich (1) über die Gepäckkontrollstation (3) zum Gepäckabholbereich (6) oder zum Nachkontrollbereich (7) sowie für den Rücktransport von leeren Ladungsträgern (2) zum Gepäckaufgabebereich (1),
wobei
- der Nachkontrollbereich (7) wenigstens einen dem Nachkontrollplatz (70, 71) zugeordneten Entnahmeplatz (72, 73) zum Entleeren des Ladungsträgers (2) durch die Person, der das Gepäck gehört, aufweist,
- der Nachkontrollbereich (7) wenigstens ein Transfersystem (74, 75) zum automatisierten Transfer des mit Gepäck beladenen Ladungsträgers (2) zum Nachkontrollplatz (70, 71) und vom Nachkontrollplatz (70, 71) zum zugeordneten Entnahmeplatz (71, 73) aufweist, wobei das Transfersystem (74, 75) zum automatisierten Transfer eines Ladungsträgers (2) zum Nachkontrollplatz (70, 71) unabhängig von der Belegung des zugeordneten Entnahmeplatzes (72, 73) mit einem Ladungsträger (2) ausgebildet ist.

2. Sicherheitskontrollsystem nach Anspruch 1, wobei vor dem Nachkontrollplatz (70, 71) ein erster Aufenthaltsbereich (P1, P3) und vor dem Entnahmeplatz (72, 73) ein zweiter Aufenthaltsbereich P2, P4) für Personen vorhanden ist, wobei die Größe des ersten und des zweiten Aufenthaltsbereichs (P1 - P4) so bemessen ist, dass sich dort jeweils wenigstens eine Person gleichzeitig aufhalten kann.

3. Sicherheitskontrollsystem nach Anspruch 1, wobei der Nachkontrollbereich (7) wenigstens ein Puffersystem (76, 77; 87) zur Zwischenlagerung von mit Gepäck beladenden Ladungsträgern (2) aufweist und das Transfersystem (74, 75) zum Transfer der im Puffersystem (76, 77; 87) zwischengelagerten, mit Gepäck beladenden Ladungsträger (2) zum Nachkontrollplatz (70, 71) ausgebildet ist.

4. Sicherheitskontrollsystem nach Anspruch 3, wobei das Puffersystem (76, 77; 87) wenigstens zwei Pufferplätze zur Zwischenlagerung von mit Gepäck beladenden Ladungsträgern (2) aufweist und das Puffersystem (76, 77; 87) zum Umsortieren der mit Gepäck beladenden Ladungsträger (2) ausgebildet ist.

5. Sicherheitskontrollsystem nach Anspruch 3, wobei das Puffersystem (76, 77; 87) zum Umsortieren der Ladungsträger (2) durch Verschieben in wenigstens zwei unterschiedliche, insbesondere orthogonale Achsrichtungen ausgebildet ist.

6. Sicherheitskontrollsystem nach Anspruch 1, wobei im Gepäckaufgabebereich (1) an jeder Abgabestation (1a, 1b, 1c) eine erste Identifikationseinrichtung (10) zur Erfassung einer persönlichen Kennung der Person vorgesehen ist, die mit einer Datenverarbeitungseinrichtung (11) zur Verknüpfung der persönlichen Kennung der Person mit dem Ladungsträger (2) , in dem sich das Gepäck der Person befindet, zusammenwirkt.

7. Sicherheitskontrollsystem nach Anspruch 6, wobei der wenigstens eine Nachkontrollplatz (70, 71) mit einer dritten Identifikationseinrichtung (78) zur Erfassung der persönlichen Kennung der am Nachkontrollplatz (70, 71) stehenden Person ausgestattet ist, wobei die dritte Identifikationseinrichtung (78) mit dem Transfersystem (74, 75) verknüpft ist, um den mit der persönlichen Kennung der Person verknüpften Ladungsträger (2) an diesen Nachkontrollplatz (70, 71) zu transferieren.

8. Sicherheitskontrollsystem nach Anspruch 3, wobei der Nachkontrollbereich (7) wenigstens zwei Nachkontrollplätze (70, 71) mit jeweils wenigstens einem zugeordneten Entnahmeplatz (72, 73) aufweist und das Transfersystem (74, 75) zum Transfer von mit Gepäck beladenen Ladungsträgern (2) aus dem Puffersystem (76, 77; 87) zu den wenigstens zwei Nachkontrollplätzen (70, 71) ausgebildet ist.

9. Sicherheitskontrollsystem nach Anspruch 2, wobei der Nachkontrollplatz (70, 71) zur Bereitstellung des Ladungsträgers (2) mit dem beanstandeten Gepäck zwischen dem ersten und dem zweiten Aufenthaltsplatz (M1, P1; M2, P3) angeordnet ist und ferner zwischen dem bereitgestellten Ladungsträger (2) und dem zweiten Aufenthaltsplatz (M1, P1; M2, P3) eine durchsichtige Sicherheitsabtrennung (79) vorgesehen ist.

10. Sicherheitskontrollsystem nach Anspruch 1, wobei der Nachkontrollbereich (7) wenigstens einen Wartebereich (80) für Personen aufweist, deren Gepäck in der Gepäckkontrollstation (3) beanstandet wurde.

11. Sicherheitskontrollsystem nach Anspruch 1, wobei an jedem Entnahmeplatz (72,73) wenigstens eine Überwachungseinrichtung (83) zur Erkennung eines nicht vollständig entleerten und/oder verschmutzen Ladungsträgers (2) vorgesehen ist.

12. Sicherheitskontrollsystem nach Anspruch 1, wobei an jedem Entnahmeplatz Eingabe- und/oder Ausgabeeinheiten vorgesehen sind, die zur Bereitstellung von Informationen an die Person und/oder zur Beendigung des Entleerungsvorgangs des Ladungsträgers durch die Person ausgebildet sind

13. Sicherheitskontrollsystem nach Anspruch 1, wobei an jedem Entnahmeplatz (72, 73) eine Sensoreinheit, die beispielsweise durch die vierte Identifikationseinrichtung (82) gebildet wird, vorgesehen ist, die dazu ausgebildet ist, das Vorhandensein einer am Entnahmeplatz (72, 73) befindlichen Person festzustellen, und die mit der Überwachungseinrichtung (83) und dem Transfersystem (74, 75) derart verknüpft ist, dass der Entleerungsprozess durch Abtransport des entleerten Ladungsträgers (2) abgeschlossen wird, wenn die Sensoreinheit keine Person vor dem Entnahmeplatz (72, 73) erkennt und der Ladungsträger leer ist.

14. Sicherheitskontrollsystem nach Anspruch 1, wobei der Nachkontrollbereich (7) angrenzend an den Gepäckabholbereich (6) angeordnet ist und wenigstens ein Entnahmeplatz (72, 73) - in Abhängigkeit der Anzahl von Personen im Nachkontrollbereich (7) und im Gepäckabholbereich (6) - als Entnahmeplatz (72, 73) oder als Entnahmestation (6a, 6b, 6c) fungiert.

15. Sicherheitskontrollverfahren, wobei
- eine Person in einem Gepäckaufgabebereich (1) mit ein oder mehreren Abgabestationen (1a, 1b, 1c) ihr Gepäck in einen an einer Abgabestation (1a, 1b, 1c) bereitgestellten Ladungsträger (2) aufgibt,
- das Gepäck in einer Gepäckkontrollstation (3) einer bildgebenden Untersuchung unterzogen wird,
- die Person ihr Gepäck in einem Gepäckabholbereich (6) abholt, sofern das Gepäck in der Gepäckkontrollstation nicht beanstandet wurde,
- die Person sich zu einem Nachkontrollbereich (7) mit wenigstens einem von zwei Seiten zugänglichen Nachkontrollplatz (70, 71) zur manuellen Nachkontrolle begibt, sofern das Gepäck in der Gepäckkontrollstation (3) beanstandet wurde, wobei der Nachkontrollplatz (70, 71) auf einer Seite von einem Mitarbeiter des Sicherheitskontrollsystems und auf der anderen Seite von der Person, der das beanstandete Gepäck gehört, zugänglich ist,
- die mit Gepäck beladenen Ladungsträger (2) vom Gepäckaufgabebereich (1) über die Gepäckkontrollstation (3) zum Gepäckabholbereich (6) oder zum Nachkontrollbereich (7) transportiert werden und leere Ladungsträger (2) zum Gepäckaufgabebereich (1) zurücktransportiert werden,
- sich die Person nach der manuellen Kontrolle des Gepäcks vom Nachkontrollplatz (70, 71) zu einem zugeordneten Entnahmeplatz (72, 73) zum Entleeren des Ladungsträgers (2) begibt,
- der mit Gepäck beladenen Ladungsträger (2) der Person vom Nachkontrollplatz (70, 71) zum zugeordneten Entnahmeplatz (72, 73) automatisiert transferiert wird, wobei der automatisierte Transfer eines neuen mit Gepäck beladenen Ladungsträgers (2) zum Nachkontrollplatz (70, 71) unabhängig von der Belegung des zugeordneten Entnahmeplatzes (72, 73) mit einem Ladungsträger (2) erfolgt.

16. Sicherheitskontrollverfahren nach Anspruch 15, wobei an jeder Abgabestation (1a, 1b, 1c) eine persönliche Kennung der Person mittels einer ersten Identifikationseinrichtung (10) erfasst wird und die persönliche Kennung der Person mittels einer Datenverarbeitungseinrichtung (11) mit dem Ladungsträger (2) , in dem sich das Gepäck der Person befindet, verknüpft wird.

17. Sicherheitskontrollverfahren nach Anspruch 16, wobei an jedem Nachkontrollplatz (70, 71) die persönliche Kennung der Person mittels einer dritten Identifikationseinrichtung (78) erfasst wird und daraufhin der mit der Person verknüpfte Ladungsträger (2) am Nachkontrollplatz (70, 71) bereitgestellt wird.

18. Sicherheitskontrollverfahren nach Anspruch 17, wobei an jedem Entnahmeplatz (72, 73) die persönliche Kennung der Person mittels einer vierten Identifikationseinrichtung (82) erfasst wird und der mit der Person verknüpft Ladungsträger (2) vom Nachkontrollplatz (70, 71) zum Entnahmeplatz (72, 73) transferiert wird.

19. Sicherheitskontrollverfahren, nach Anspruch 18, wobei der Entleerungsprozesses des Ladungsträgers (2) am Entnahmeplatz (72, 73) automatisiert beendet und der Ladungsträger (2) abtransportiert wird, indem eine Überwachungseinheit (83) einen leeren Ladungsträger (2) erkennt und eine Sensoreinheit gebildet wird, feststellt, dass sich keine Person an dem Entnahmeplatz (72, 73) befindet.

## Claims

1. A security inspection system, comprising
- a luggage drop-off region (1) with at least one drop-off station (1a, 1b, 1c) for dropping off a person's luggage into at least one load carrier (2),
- a luggage inspection station (3) for imaging examination of the luggage,
- a luggage pick-up region (6) for luggage not objected to at the luggage inspection station,
- a follow-up inspection region (7) with at least one follow-up inspection station (70, 71) accessible from two sides for manual follow-up inspection of luggage objected to at the luggage inspection station by security personnel in the presence of the person to whom the luggage belongs,
- a transport system (8) for transporting the load carriers (2) laden with luggage from the luggage drop-off region (1) via the luggage inspection station (3) to the luggage pick-up region (6) or to the follow-up inspection region (7) and for returning empty load carriers (2) to the luggage drop-off region (1),
wherein
- the follow-up inspection region (7) has at least one removal station (72, 73) associated with the follow-up inspection station (70, 71) for emptying of the load carrier (2) by the person to whom the luggage belongs,
- the follow-up inspection region (7) has at least one transfer system (74, 75) for automated transfer of the load carrier (2) laden with luggage to the follow-up inspection station (70, 71) and from the follow-up inspection station (70, 71) to the associated removal station (71, 73), wherein the transfer system (74, 75) is designed for automated transfer of a load carrier (2) to the follow-up inspection station (70, 71) irrespective of whether the associated removal station (72, 73) is occupied by a load carrier (2).

2. The security inspection system according to claim 1, wherein there is a first sojourn region (P1, P3) for persons in front of the follow-up inspection station (70, 71) and a second sojourn region (P2, P4) for persons in front of the removal station (72, 73), wherein the size of the first and second sojourn regions (P1-P4) is such that at least one person can stay in each of them at the same time.

3. The security inspection system according to claim 1, wherein the follow-up inspection region (7) has at least one buffer system (76, 77; 87) for the temporary storage of load carriers (2) laden with luggage and the transfer system (74, 75) is designed to transfer the load carriers (2) laden with luggage temporarily stored in the buffer system (76, 77; 87) to the follow-up inspection station (70, 71).

4. The security inspection system according to claim 3, wherein the buffer system (76, 77; 87) has at least two buffer stations for the temporary storage of load carriers (2) laden with luggage and the buffer system (76, 77; 87) is designed for re-sorting the load carriers (2) laden with luggage.

5. The security inspection system according to claim 3, wherein the buffer system (76, 77; 87) is designed for re-sorting the load carriers (2) by displacement in at least two different, in particular orthogonal, axial directions.

6. The security inspection system according to claim 1, wherein in the luggage drop-off region (1) at each drop-off station (1a, 1b, 1c) a first identification device (10) is provided for detecting a personal identifier of the person, which interacts with a data processing device (11) for linking the personal identifier of the person with the load carrier (2) in which the person's luggage is located.

7. The security inspection system according to claim 6, wherein the at least one follow-up inspection station (70, 71) is equipped with a third identification device (78) for detecting the personal identifier of the person standing at the follow-up inspection station (70, 71), wherein the third identification device (78) is linked to the transfer system (74, 75) in order to transfer the load carrier (2) linked to the personal identifier of the person to this follow-up inspection station (70, 71).

8. The security inspection system according to claim 3, wherein the follow-up inspection region (7) has at least two follow-up inspection stations (70, 71), each with at least one associated removal station (72, 73), and the transfer system (74, 75) is designed to transfer load carriers (2) laden with luggage from the buffer system (76, 77; 87) to the at least two follow-up inspection stations (70, 71).

9. The security inspection system according to claim 2, wherein the follow-up inspection station (70, 71) for providing the load carrier (2) with the luggage objected to is arranged between the first and the second sojourn location (M1, P1; M2, P3) and furthermore a transparent security partition (79) is provided between the provided load carrier (2) and the second sojourn location (M1, P1; M2, P3).

10. The security inspection system according to claim 1, wherein the follow-up inspection region (7) has at least one waiting area (80) for persons whose luggage was objected to in the luggage inspection station (3).

11. The security inspection system according to claim 1, wherein at each removal station (72, 73) at least one monitoring device (83) is provided for detecting a load carrier (2) that is not completely emptied and/or is soiled.

12. The security inspection system according to claim 1, wherein input and/or output units are provided at each removal station, which are designed to provide information to the person and/or to terminate the emptying process of the load carrier by the person.

13. The security inspection system according to claim 1, wherein a sensor unit, which is formed for example by the fourth identification device (82), is provided at each removal station (72, 73), which unit is designed to determine the presence of a person located at the removal station (72, 73) and which is linked to the monitoring device (83) and the transfer system (74, 75) in such a way that the emptying process is completed by removing the emptied load carrier (2) if the sensor unit does not detect a person in front of the removal station (72, 73) and the load carrier is empty.

14. The security inspection system according to claim 1, wherein the follow-up inspection region (7) is arranged adjacent to the luggage pick-up region (6) and at least one removal station (72, 73)-depending on the number of persons in the follow-up inspection region (7) and in the luggage pick-up region (6)-functions as a removal point (72, 73) or as a removal station (6a, 6b, 6c).

15. A security inspection method, wherein
- a person in a luggage drop-off region (1) with one or more drop-off stations (1a, 1b, 1c) drops off his or her luggage in a load carrier (2) provided at a drop-off station (1a, 1b, 1c),
- the luggage is subjected to an imaging examination at a luggage inspection station (3),
- the person collects his/her luggage in a luggage pick-up region (6), provided that the luggage was not objected to at the luggage inspection station,
- the person goes to a follow-up inspection region (7) with at least one follow-up inspection station (70, 71) accessible from two sides for manual follow-up inspection, if the luggage was objected to at the luggage inspection station (3), wherein the follow-up inspection station (70, 71) is accessible on one side by an employee of the security inspection system and on the other side by the person to whom the luggage objected to belongs,
- the load carriers (2) laden with luggage are transported from the luggage drop-off region (1) via the luggage inspection station (3) to the luggage pick-up region (6) or to the follow-up inspection region (7) and empty load carriers (2) are transported back to the luggage drop-off region (1),
- after the manual inspection of the luggage, the person goes from the follow-up inspection station (70, 71) to an assigned removal station (72, 73) to empty the load carrier (2),
- the person's load carrier (2) laden with luggage is transferred automatically from the follow-up inspection station (70, 71) to the assigned removal station (72, 73), wherein the automatic transfer of a new load carrier (2) laden with luggage to the follow-up inspection station (70, 71) takes place irrespective of whether the assigned removal station (72, 73) is occupied with a load carrier (2).

16. The security inspection method according to claim 15, wherein at each drop-off station (1a, 1b, 1c) a personal identifier of the person is detected by means of a first identification device (10) and the personal identifier of the person is linked by means of a data processing device (11) to the load carrier (2) in which the person's luggage is located.

17. The security inspection method according to claim 16, wherein at each follow-up inspection station (70, 71) the personal identifier of the person is detected by means of a third identification device (78) and then the load carrier (2) linked to the person is made available at the follow-up inspection station (70, 71).

18. The security inspection method according to claim 17, wherein at each removal station (72, 73) the personal identifier of the person is detected by means of a fourth identification device (82) and the load carrier (2) linked to the person is transferred from the follow-up inspection station (70, 71) to the removal station (72, 73).

19. The security inspection method according to claim 18, wherein the emptying process of the load carrier (2) at the removal station (72, 73) is automatically terminated and the load carrier (2) is transported away, in that a monitoring unit (83) detects an empty load carrier (2) and a sensor unit is formed, determines that no person is present at the removal station (72, 73).

## Revendications

1. Système de contrôle de sécurité comprenant :
- une zone d'enregistrement des bagages (1) comprenant au moins une station de dépôt (1a, 1b, 1c) et servant à l'enregistrement des bagages d'une personne dans au moins un support de charge (2),
- une station de contrôle des bagages (3) pour l'examen par imagerie des bagages,
- une zone de récupération des bagages (6) pour des bagages non contestés dans la station de contrôle des bagages,
- une zone de contrôle de suivi (7) comprenant au moins un emplacement de contrôle de suivi (70, 71) accessible de deux côtés et servant au contrôle de suivi manuel, par un personnel de sécurité, pour des bagages contestés dans la station de contrôle des bagages, ledit contrôle de suivi ayant lieu en présence de la personne à qui les bagages appartiennent,
- un système de transport (8) conçu pour le transport des supports de charge (2) chargés de bagages, ledit transport étant effectué à partir de la zone d'enregistrement des bagages (1) jusqu'à la zone de récupération des bagages (6) en passant par la station de contrôle des bagages (3), ou bien effectué jusqu'à la zone de contrôle de suivi (7), ledit système de transport étant conçu également pour le transport de retour de supports de charge vides (2) jusqu'à la zone d'enregistrement des bagages (1), où :
- la zone de contrôle de suivi (7) présente au moins un emplacement d'enlèvement (72, 73) affecté à l'emplacement de contrôle de suivi (70, 71) pour le déchargement du support de charge (2) par la personne à qui les bagages appartiennent,
- la zone de contrôle de suivi (7) présente au moins un système de transfert (74, 75) servant au transfert automatisé du support de charge (2) chargé de bagages, ledit transfert étant effectué jusqu'à l'emplacement de contrôle de suivi (70, 71) et depuis l'emplacement de contrôle de suivi (70, 71) jusqu'à l'emplacement d'enlèvement associé (72, 73), où le système de transfert (74, 75) servant au transfert automatisé d'un support de charge (2) jusqu'à l'emplacement de contrôle de suivi (70, 71) est configuré indépendamment du fait que l'emplacement d'enlèvement associé (72, 73) est occupé par un support de charge (2).

2. Système de contrôle de sécurité selon la revendication 1, où, devant l'emplacement de contrôle de suivi (70, 71), il y a une première zone d'arrêt (P1, P3) et, devant l'emplacement d'enlèvement (72, 73), il y a une deuxième zone d'arrêt (P2, P4) pour des personnes, où la taille de la première et de la deuxième zone d'arrêt (P1 - P4) est dimensionnée de manière telle, qu'au moins une personne puisse à chaque fois s'y trouver en même temps.

3. système de contrôle de sécurité selon la revendication 1, où la zone de contrôle de suivi (7) présente au moins un système de tampons (76, 77 ; 87) servant au stockage temporaire de supports de charge (2) chargés de bagages, et le système de transfert (74, 75) est conçu pour le transfert, jusqu'à l'emplacement de contrôle de suivi (70, 71), des supports de charge (2) chargés de bagages et stockés de façon temporaire dans le système de tampons (76, 77 ; 87).

4. Système de contrôle de sécurité selon la revendication 3, où le système de tampons (76, 77 ; 87) présente au moins deux espaces tampons servant au stockage temporaire de supports de charge (2) chargés de bagages, et le système de tampons (76, 77 ; 87) est conçu pour retrier les supports de charge (2) chargés de bagages.

5. système de contrôle de sécurité selon la revendication 3, où le système de tampons (76, 77 ; 87) est conçu pour retrier les supports de charge (2) par déplacement dans au moins deux directions axiales - en particulier orthogonales - différentes.

6. système de contrôle de sécurité selon la revendication 1, où il est prévu dans la zone d'enregistrement des bagages (1), à chaque station de dépôt (1a, 1b, 1c), un premier dispositif d'identification (10) servant à détecter un identifiant personnel de la personne, premier dispositif d'identification qui agit de façon conjointe avec un système de traitement de données (11) servant à la liaison de l'identifiant personnel de la personne avec le support de charge (2) dans lequel se trouvent les bagages de la personne.

7. Système de contrôle de sécurité selon la revendication 6, où l'au moins un emplacement de contrôle de suivi (70, 71) est doté d'un troisième dispositif d'identification (78) servant à détecter l'identifiant personnel de la personne qui se trouve à l'emplacement de contrôle de suivi (70, 71), où le troisième dispositif d'identification (78) est combiné avec le système de transfert (74, 75), afin de transférer, jusqu'à cet emplacement de contrôle de suivi (70, 71), le support de charge (2) lié à l'identifiant personnel de la personne.

8. système de contrôle de sécurité selon la revendication 3, où la zone de contrôle de suivi (7) présente au moins deux emplacements de contrôle de suivi (70, 71) dotés à chaque fois d'au moins un emplacement d'enlèvement associé (72, 73), et le système de transfert (74, 75) est conçu pour le transfert de supports de charge (2) chargés de bagages, ledit transfert étant effectué depuis le système de tampons (76, 77 ; 87) jusqu'aux au moins deux emplacements de contrôle de suivi (70, 71).

9. système de contrôle de sécurité selon la revendication 2, où l'emplacement de contrôle de suivi (70, 71) servant à la mise à disposition du support de charge (2), avec les bagages contestés, est disposé entre le premier et le deuxième emplacement d'arrêt (M1, P1 ; M2, P3), et il est prévu en outre une cloison de séparation transparente (79) placée entre le support de charge (2) mis à disposition et le deuxième emplacement d'arrêt (M1, P1 ; M2, P3).

10. Système de contrôle de sécurité selon la revendication 1, où la zone de contrôle de suivi (7) présente au moins une zone d'attente (80) pour des personnes dont les bagages ont été contestés dans la station de contrôle des bagages (3).

11. Système de contrôle de sécurité selon la revendication 1, où il est prévu, à chaque emplacement d'enlèvement (72, 73), au moins un dispositif de surveillance (83) servant à détecter un support de charge (2) non complètement vidé et/ou encrassé.

12. Système de contrôle de sécurité selon la revendication 1, où il est prévu, à chaque emplacement d'enlèvement, des unités d'entrée et/ou de sortie qui sont conçues pour la mise à disposition d'informations à la personne et/ou pour l'achèvement du processus de déchargement du support de charge par la personne.

13. Système de contrôle de sécurité selon la revendication 1, où il est prévu, à chaque emplacement d'enlèvement (72, 73), une unité de capteur qui est formée par exemple par le quatrième dispositif d'identification (82), unité de capteur qui est conçue pour constater la présence d'une personne se trouvant à l'emplacement d'enlèvement (72, 73) et qui est combinée avec le dispositif de surveillance (83) et avec le système de transfert (74, 75), de manière telle que le processus de déchargement soit achevé par l'évacuation du support de charge vidé (2), si l'unité de capteur ne détecte aucune personne devant l'emplacement d'enlèvement (72, 73) et si le support de charge est vide.

14. Système de contrôle de sécurité selon la revendication 1, où la zone de contrôle de suivi (7) est disposée de façon adjacente à la zone de récupération des bagages (6), et au moins un emplacement d'enlèvement (72, 73) - en fonction du nombre de personnes se trouvant dans la zone de contrôle de suivi (7) et dans la zone de récupération des bagages (6) - fonctionne comme emplacement d'enlèvement (72, 73) ou comme station d'enlèvement (6a, 6b, 6c).

15. Procédé de contrôle de sécurité, où :
- une personne, qui se trouve dans une zone d'enregistrement des bagages (1) comprenant une ou plusieurs stations de dépôt (1a, 1b, 1c), enregistre ses bagages dans un support de charge (2) mis à disposition dans une station de dépôt (1a, 1b, 1c),
- les bagages se trouvant dans une station de contrôle des bagages (3) sont soumis à un examen par imagerie,
- la personne récupère ses bagages dans une zone de récupération des bagages (6), dans la mesure où les bagages n'ont pas été contestés dans la station de contrôle des bagages,
- pour le contrôle de suivi manuel, la personne se rend dans une zone de contrôle de suivi (7) comprenant au moins un emplacement de contrôle de suivi (70, 71) accessible de deux côtés, dans la mesure où les bagages ont été contestés dans la station de contrôle des bagages (3), où l'emplacement de contrôle de suivi (70, 71) est accessible, sur un côté, par un employé du système de contrôle de sécurité et, sur l'autre côté, accessible par la personne à qui appartiennent les bagages contestés,
- les supports de charge (2) chargés de bagages sont transportés à partir de la zone d'enregistrement des bagages (1) jusqu'à la zone de récupération des bagages (6) en passant par la station de contrôle des bagages (3), ou bien transportés jusqu'à la zone de contrôle de suivi (7), et des supports de charge vides (2) sont retransportés jusqu'à la zone d'enregistrement des bagages (1),
- après le contrôle manuel des bagages, la personne se rend, en partant de l'emplacement de contrôle de suivi (70, 71), jusqu'à un emplacement d'enlèvement associé (72, 73) pour le déchargement du support de charge (2),
- le support de charge (2) chargé de bagages de la personne est transféré de manière automatisée depuis l'emplacement de contrôle de suivi (70, 71) jusqu'à l'emplacement d'enlèvement associé (72, 73), où le transfert automatisé d'un nouveau support de charge (2) chargé de bagages est effectué jusqu'à l'emplacement de contrôle de suivi (70, 71), indépendamment du fait que l'emplacement d'enlèvement associé (72, 73) est occupé par un support de charge (2).

16. Procédé de contrôle de sécurité selon la revendication 15, où, à chaque station de dépôt (1a, 1b, 1c), un identifiant personnel de la personne est détecté au moyen d'un premier dispositif d'identification (10), et l'identifiant personnel de la personne, au moyen d'un dispositif de traitement de données (11), est lié au support de charge (2) dans lequel se trouvent les bagages de la personne.

17. Procédé de contrôle de sécurité selon la revendication 16, où, à chaque emplacement de contrôle de suivi (70, 71), l'identifiant personnel de la personne est détecté au moyen d'un troisième dispositif d'identification (78) et, à la suite de quoi, le support de charge (2) lié à la personne est mis à disposition à l'emplacement de contrôle de suivi (70, 71).

18. Procédé de contrôle de sécurité selon la revendication 17, où, à chaque emplacement d'enlèvement (72, 73), l'identifiant personnel de la personne est détecté au moyen d'un quatrième dispositif d'identification (82), et le support de charge (2) lié à la personne est transféré depuis l'emplacement de contrôle de suivi (70, 71) jusqu'à l'emplacement d'enlèvement (72, 73).

19. Procédé de contrôle de sécurité selon la revendication 18, où le processus de déchargement du support de charge (2) se produisant à l'emplacement d'enlèvement (72, 73) est achevé de manière automatisée et le support de charge (2) est évacué, tandis qu'une unité de surveillance (83) détecte un support de charge vide (2), et une unité de capteur, qui est formée, constate qu'aucune personne ne se trouve à l'emplacement d'enlèvement (72, 73).
